# EUROPÄISCHE PATENTSCHRIFT

(11) **EP 2 133 186 B1**
(45) Veröffentlichungstag und Bekanntmachung des Hinweises auf die Patenterteilung: **22.01.2014**
(21) Anmeldenummer: 09161739.9
(22) Anmeldetag: 03.06.2009
(51) Int. Cl.: B29C 33/00, B29C 33/38

(54) **Werkzeug, sowie Verfahren zum Herstellen eines Werkzeugs, insbesondere zur Herstellung faserverstärkter Bauteile**
Tool and method for producing a tool, in particular for manufacturing fibre-reinforced components
Outil, ainsi que procédé de fabrication d'un outil, notamment pour la fabrication de composants renforcés en fibres

(30) Priorität: 13.06.2008 DE 102008028076
(43) Veröffentlichungstag der Anmeldung: 16.12.2009
(73) Patentinhaber: MBB Fertigungstechnik GmbH, 48361 Beelen (DE)
(72) Erfinder: Bühlmeyer, Robert, 33442 Herzebrock-Clarholz (DE)
(74) Vertreter: Bittner, Thomas L.

(56) Entgegenhaltungen:
- EP-A- 0 807 504
- EP-A- 1 277 554
- DE-A1- 10 022 686
- JP-A- 61 283 510
- JP-A- 2005 329 555

## Beschreibung

Die Erfindung betrifft ein Werkzeug, welches zur Herstellung von faserverstärkten Bauteilen geeignet ist, sowie ein Verfahren zum Herstellen eines solchen Werkzeugs. Insbesondere wird ein erfindungsgemäßes Werkzeug bei der Herstellung von kohlenfaserverstärkten (CFK) Bauteilen oder dergleichen eingesetzt bei denen aus Verstärkungsfasern bestehende Schichten oder Matten auf dem Werkzeug ausgelegt werden, wonach die mit den Verstärkungsfasern versehenen Matten oder Schichten mit einem Harz getränkt werden, welches im Anschluss unter Wärmeeinwirkung aushärtet.

Aus der DE 100 13 409 C1 ist ein Verfahren zur Herstellung von faserverstärkten Kunststoff-Bauteilen bekannt geworden, bei dem ein Faserverbund-Halbzeug auf einer Oberfläche eines Werkzeugs angeordnet wird und bei dem das Werkzeug mit einer Folie abgedichtet wird. Aus dem Raum zwischen der Folie und der Oberfläche des Werkzeugs wird die Luft evakuiert und ein Matrixmaterial (Harz) in den Zwischenraum injiziert. Durch das angelegte Vakuum wird das Matrixmaterial (Harz) in dem Zwischenraum zwischen der Oberfläche des Werkzeugs und der Folie verteilt. Nachdem das Werkzeug in einem Ofen auf die gewünschte Reaktionstemperatur gebracht wird, härtet das Harz aus und die von dem Werkzeug vorgegebene Form bildet sich in dem faserverstärkten Bauteil aus. Nach erfolgter Aushärtung kann das Bauteil entnommen werden. Das bekannte Verfahren eignet sich auch zur Herstellung großflächiger faserverstärkter Bauteile.

Eine Schwierigkeit ist allerdings die Herstellung eines passgenauen Werkzeugs, welches die gewünschten Formabweichungen eines fertigen dreidimensionalen Bauteils gewährleistet.

Zur Herstellung von faserverstärkten Bauteile nach solchen Verfahren werden im Stand der Technik oftmals Werkzeuge verwendet, bei denen die Werkzeugschale zur Formgebung aus einem faserverstärkten Kunststoff besteht, die durch eine Urform hergestellt wird. Die Formstabilität wird durch einen Unterbau aus einer Vielzahl von rohrartigen Stahlprofilen hergestellt Ein solches Werkzeug zur Herstellung von faserverstärkten Bauteilen ist wirtschaftlich bei der Herstellung kleiner Stückzahlen. Nachteilig ist allerdings, dass die Formstabilität der Formschale durch unterschiedliche Ausdehnungen der aus einem faserverstärkten Kunststoff bestehenden Formschale und des Unterbaus aus Stahl nur eingeschränkt ist. Daraus ergibt sich, dass nur eine geringe Anzahl an faserverstärkten Bauteilen mit einer Form herstellbar ist, bevor diese ersetzt werden muss.

Des Weiteren ist im Stand der Technik ein Werkzeug bekannt geworden, bei dem auf ein Grundgerüst aus Stahl einzelne Platten aufgeschweißt werden, bis durch eine Vielzahl von aufgeschweißten Platten die gewünschte Form entsteht. Beispielsweise kann ein solches Werkzeug aus FeNi 36-Stahl (Invar) bestehen, einem Spezialstahl, der eine geringe Wärmeausdehnung aufweist, allerdings auch schwer zerspanbar ist, woraus hohe Halbzeug- und Werkzeugkosten resultieren. Mit einem solchen Werkzeug ist eine hohe Ausbringung mit einem Werkzeug möglich, wobei aber die geringe Wärmeleitfähigkeit und die hohe Wärmekapazität den formgebenden Prozess erschwert und die Ausbringung verringert.

Vor dem beschriebenen Stand der Technik ist es deshalb die Aufgabe der vorliegenden Erfindung, ein Werkzeug insbesondere zur Herstellung von faserverstärkten Bauteilen und ein Verfahren zum Herstellen eines solchen Werkzeugs zur Verfügung zu stellen, womit eine hohe Fertigungsrate möglich ist, während gleichzeitig eine hohe Genauigkeit und insbesondere auch eine wirtschaftliche Produktion auch bei höheren Stückzahlen möglich ist.

Unter anderem aus der JP 2005 329 555 ist eine sogenannte klassische Gussform bekannt geworden, bei der das Bauteil durch den von zwei Gussformelementen umschlossenen Hohlraum gebildet wird in den Kunststoff eingespritzt wird. Derartige Gussformen sind nicht geeignet faserverstärkte Bauteile zu formen, da diese nicht zwischen zwei Gussformelementen positioniert werden können.

Weiter ist aus der EP 807 504 ein Formwerkzeug für faserverstärkte Bauteile bekannt geworden, deren die Form des Bauteils bestimmende Fläche einstückig ausgebildet ist. Derartige Strukturen haben den Nachteil, dass eine gleichmäßige und kontinuierliche Wärmeabführung nicht gewährleistet ist.

Diese Aufgabe wird gelöst durch ein Werkzeug mit den Merkmalen des Anspruchs 1 und durch ein Verfahren zum Herstellen eines Werkzeugs mit den Merkmalen des Anspruchs 12. Bevorzugte Weiterbildungen der Erfindung sind Gegenstand der jeweiligen Unteransprüche. Weitere Vorteile und Merkmale der Erfindung ergeben sich aus der Beschreibung des Ausführungsbeispiels.

Das erfindungsgemäße Werkzeug dient zur Herstellung von faserverstärkten Bauteilen und umfasst wenigstens eine Werkzeugschale mit einer Oberseite zur Formgebung des faserverstärkten Bauteils und eine Unterseite. Die Werkzeugschale ist im Wesentlichen formstabil ausgebildet wozu die Werkzeugschale an der Unterseite eine angeformte Rippenstruktur aufweist.

Das erfindungsgemäße Werkzeug hat viele Vorteile. Ein erheblicher Vorteil des erfindungsgemäßen Werkzeugs ist, dass eine hohe Formstabilität vorliegt, womit reproduzierbare und hoch qualitative faserverstärkte Bauteile herstellbar sind. Durch die Formstabilität der Werkzeugschale bedingt ist es möglich, mit einem werkzeug eine Vielzahl von faserverstärkten Bauteilen zu produzieren, ohne dass die Qualität der Bauteile abnimmt.

Mit der erfindungsgemäßen Werkzeugschale kann die fertigungsgenauigkeit erheblich verbessert werden. Insbesondere durch die Ausbildung der angeformten Rippenstruktur kann eine gezielte Beeinflussung des Dehnverhaltens des Werkzeugs bei Wärmeeinwirkung erzielt werden. Da die Aushärtung des faserverstärkten Bauteils regelmäßig bei erhöhten Temperaturen erfolgt, die beispielsweise 180° betragen kann, bewirkt die Wärmeausdehnung des Werkzeugs im Stand der Technik eine ungenaue Fertigungsqualität des faserverstärkten Bauteils. Im Gegensalz dazu wird erfingdungsgemäß durch die angeformte Rippenstruktur eine hohe Homogenität der Wärmeausdehnung erzielt. Weiterhin wird die örtliche wärmeausdehnung vorberechnet und vorbestimmt, sodass eine Korrektur der Wärmeausdehnung erfolgt, um so die Wärmeausdehnung im Vorhinein zur kompensieren.

Da das Werkzeug zur Herstellung einer Vielzahl von faserverstärkten Bauteile eingesetzt werden kann, sind die Werkzeugkosten pro hergestelltes Bauteil gering.

In einer bevorzugten Weiterbildung der Erfindung umfasst die Rippenstruktur eine Mehrzahl an Verstärkungsrippen, welche den gleichen Wärmeausdehnungskoffizienten wie die Werkzeugshale aufweisen und welche insbesondere aus im Wesentlichen dem gleichen Werkstoff bestehen, Insbesondere besteht das Werkzeug aus einem Stahl und insbesondere aus einem gasdichten oder doch im Wesentlichen gasdichten Stahl.

Ein Werkzeug mit einer Mehrzahl an Verstärkungsrippen auf der Unterseite, wobei die Verstärkungsrippen und die Werkzeugschale aus dem gleichen Werkstoff bestehen, ist sehr vorteilhaft, da sich durch die Ausdehnung bei höheren Temperaturen definierte Bedingungen ergeben, die wesentlich durch die dreidimensionale Struktur der Verstärkungsrippen beeinflussbar ist. Durch eine geeignete Wahl der Verläufe und der Querschnitte der Verstärkungsrippen kann die Ausdehnung gezielt beeinflusst werden.

Insbesondere ist die Rippenstruktur einstückig mit der Werkzeugschale ausgebildet, sodass eine homogene Werkzeugschale vorliegt, deren Wärmeausdehnungsverhalten vorhersagbar und berechenbar ist.

Vorzugsweise besteht die Werkzeugschale aus einem gegossenen Material, welches beidseitig nachbearbeitet ist. Besonders bevorzugt besteht die Werkzeugschale aus einem Gussstahl. Ein luft- und insbesondere im Wesentlichen gasdichter Gussstahl ermöglicht eine flexible Gestaltung der Kontur der Werkzeugschale, wodurch die Formgebung der Oberseite des Werkzeugs im hohen Maße an die gewünschte Form des faserverstärkten Bauteils angepasst werden kann.

Bevorzugt ist z.B. der Einsatz von ST 52, der eine gegenüber Invar-Stahl erheblich höhere Wärmeleitfähigkeit aufweist, die dem gegenüber ein drei- oder vierfaches betragen kann. Dadurch wird der Aufheiz- und Abkühlprozess zur Aushärtung des CFK-Bauteils stark beschleunigt, sodass die Fertigungsrate steigt. Möglich ist auch die Verwendung eines anderen vakuumdichten Gussstahls.

In bevorzugten Weiterbildungen sind eine Wandstärke der Werkzeugschale und eine Wandstärke der Verstärkungsrippen im Wesentlichen über der gesamten Werkzeugschale konstant. Dies erlaubt eine besonders homogene Aufheizung und Abkühlung des Werkzeugs, sodass möglichst gleiche Bedingungen über der Werkzeugschale vorlieben. Daraus resultiert eine gleichbleibende Qualität der faserverstärkten Bauteile über der gesamten Fläche. Weiterhin erleichtert eine solche Gestaltung die Berechnung der Form des Werkzeugs unter Berücksichtigung der Temperaturausdehnung bei der angestrebten Aushärtungstemperatur. Weiterhin wird die Kompensation der Temperaturausdehnung des Werkzeugs ermöglicht, was eine noch präzisere Herstellung der faserverstärkten Bauteile ermöglicht.

Durch das Gussverfahren mit einer anschließenden beidseitigen Bearbeitung der Werkzeugschale ist es möglich, die Wandstärke der Werkzeugschale kleiner 30 mm und insbesondere in einem Bereich zwischen etwa 5 mm und 20 mm bei z.B. etwa 10 mm auszubilden. Vorzugsweise beträgt eine Höhe der Verstärkungsrippen senkrecht zur Oberfläche der Werkzeugschalen zwischen 5 mm und 100 mm, während eine Dicke der Verstärkungsrippen parallel zur Oberfläche der Werkzeugschale insbesondere gleich der Wandstärke der Werkzeugschale ausgerührt ist und insbesondere kleiner 30 mm und vorzugsweise zwischen etwa 5 mm und 20 mm beträgt und bei z,B. 10 mm liegen kann.

In allen Ausgestaltungen des Werkzeugs kann eine Struktur der Verstärkungsrippen rechteckig, abgerundet, drei- oder mehreckig oder wabenförmig ausgebildet sein. Insbesondere ist die Struktur der Verstärkungsrippen über der Oberfläche des Werkzeugs entsprechend ausgebildet. Ein Querschnitt einzelner Verstärkungsrippen ist vorzugsweise rechteckig ausgebildet, um so eine konstante Wandstärke der Werkzeugschale und der angeformten Verstärkungsrippen zu gewährleisten.

Gemäß einer besonders vorteilhaften Weiterbildung besteht die Werkzeugschale aus wenigstens zwei separaten Segmenten, welche insbesondere luftdicht und vakuumdicht miteinander verbunden sind. Die Vakuumdichtigkeit ist insofern wichtig, da bei Einsatz eines Verfahrens, bei dem das flüssige Harz über einen Unterdruck in den Zwischenraum zwischen der Oberseite des Werkzeugs und einer aufgebrachten Folie gesaugt wird, dann eine sichere Funktion der Werkzeugschale insgesamt gewährleistet werden kann.

Um die nötige Vakuumdichtigkeit zu gewährleisten, sind die Segmente der Werkzeugschale auf der Oberseite miteinander verschweißt. Das erfolgt insbesondere über ein Laserschweißverfahren erfolgen, bei dem das Material der Segmente an der Verbindungsschweißnaht nur lokal aufgeschmolzen wird, wodurch ein Verzug des Werkzeugs durch die Temperatureinwirkung weitgehend vermieden wird.

Vorzugsweise wird zusätzlich zu einem möglichen Schweißvorgang auf der Oberseite auch auf der Unterseite der Segmente eine Verbindung hergestellt. Die Segmente werden auf der Unterseite formschlüssig miteinander verbunden. Beispielsweise ist es möglich, zwei Segmente über Passstifte zunächst gegeneinander zu fixieren, um anschließend die beiden Segmente auf der Unterseite miteinander zu verschrauben. Durch die Passstifte wird dabei gewährleisten dass die Segmente ortsfest zueinander ausgerichtet sind.

In einer bevorzugten Weiterbildung des erfindungsgemäßen Werkzeugs können auf der Oberseite der Werkzeugschale eine oder mehrere Solldehnstellen vorgegeben werden, wozu eine entsprechende Gestaltung der Rippenstruktur auf der Unterseite erfolgt. Beispielsweise kann durch eine geringere Dicke und/oder durch eine geringere Höhe einer bestimmten Rippe lokal eine geringere Steifigkeit eingestellt werden, die zu einer größeren Dehnung in dem entsprechenden Bereich führt. Über derartige z.B. höhere und niedrigere Verstärkungsrippen kann die Temperaturausdehnung des Werkzeugs an die gewünschten Eigenschaften angepasst werden.

Vorzugsweise ist in einem Randbereich auf der Oberseite eine Aufnahmerille vorgesehen, welche zur Aufnahme einer Prozessfolie dient. Eine solche Prozessfolie kann einen Lufteinlassstutzen bzw. einen Luftauslassstutzen und einen Stutzen zum Einlassen von flüssigem Harz aufweisen, um Luft aus der Zwischenschicht zwischen der Prozessfolie und der Oberseite der Werkzeugschale abzusaugen und über den Unterdruck das flüssige Harz gleichmäßig anzusaugen und zu verteilen.

Vorzugsweise wird ein duroplastischer Werkstoff eingesetzt, der mit Kohlefasern, Glasfasern, Aramidfasern, Bohrfasen oder ähnlichen Verstärkungsfasern verstärkt wird. In Einzelfällen ist auch der Einsatz von sogenannten Prepregs möglich, bei denen die eingesetzten Fasermatten mit dem Harz getränkt sind. Möglich ist aber auch der Einsatz von thermoplastischen Werkstoffen, die meist bei geringeren Temperaturen verarbeitbar sind.

Mit dem erfindungsgemäßen Verfahren wird ein Werkzeug hergestellt, welches insbesondere zur Herstellung faserverstärkter Bauteile geeignet ist. Dabei wird eine Werkzeugschale durch ein Gießverfahren hergestellt, wobei sowohl die zur Formgebung des faserverstärkten Bauteils vorgesehene Oberseite als auch die gegenüberliegende Unterseite nach dem Gießverfahren nachbearbeitet werden, um auf der Unterseite eine Rippenstruktur mit einer Mehrzahl an Verstärkungsrippen auszubilden, um eine formstabile Werkzeugschale zu bilden.

Auch das erfindungsgemäße Verfahren bietet viele Vorteile. Ein erheblicher Vorteil ist die Fertigung des Werkzeugs durch ein Gießverfahren und eine anschließende Nachbearbeitung sowohl der formgebenden Oberseite als auch der Unterseite der Werkzeugschale. Durch das Gießverfahren wird die Herstellung einer Werkzeugschale ermöglicht, welche nach der Nachbearbeitung der Ober- und der Unterseite den angestrebten Anforderungen genügt.

Bei dem Gießverfahren kann hingegen auf die speziellen Eigenschaften des eingesetzten Werkstoffs Rücksicht genommen werden, sodass beim Gießen die Bildung von Lenkern vermieden werden kann. Durch die Nachbearbeitung der Unterseite mit der Rippenstruktur wird die gewünschte Formstabilität der Werkzeugschale erzielt, während durch die Nachbearbeitung der Oberseite die Oberseite an die gewünschte Form der herzustellenden faserverstärkten Bauteile angepasst wird.

In bevorzugten Weiterbildungen wird die Werkzeugschale durch wenigstens zwei separate Segmente gebildet, die auf der Oberseite miteinander verschweißt und auf der Unterseite formschlüssig miteinander verbunden werden.

Weitere Vorteile und Merkmale der vorliegenden Erfindung ergeben sich aus der nachfolgenden Beschreibung eines Ausführungsbeispiels, welches mit Bezug auf die beiliegenden Figuren nachfolgend beschrieben wird.

In den Figuren zeigen:
- Figur 1: eine perspektivische Draufsicht auf ein erfindungsgemäßes Werkzeug;
- Figur 2: eine perspektivische Unteransicht des Werkzeugs nach Fig. 1;
- Figur 3: eine perspektivische Ansicht eines Segments des Werkzeugs nach Fig. 1 nach dem Gießvorgang
- Figur 4: ein Detail der Unteransicht des Werkzeugs nach Fig. 1;
- Figur 5: das Werkzeug nach Fig. 1 bei der Herstellung eines faserverstärkten Bauteils: und
- Figur 6: die Struktur und die Abweichungen eines hergestellten Bauteils.

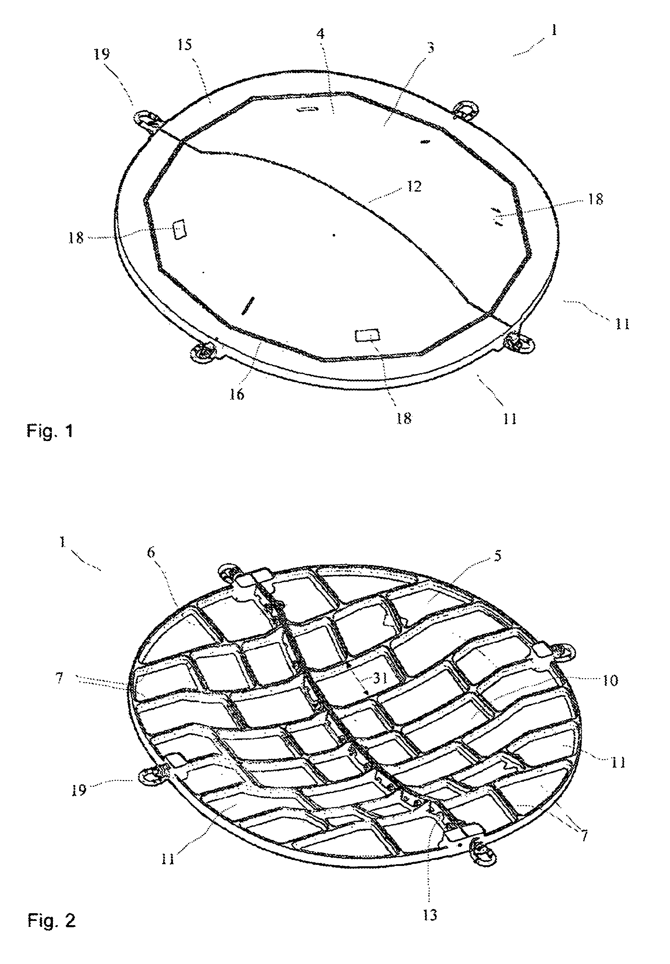

In den Fig. 1 - 6 wird im Folgenden ein Ausführungsbeispiel der vorliegenden Erfindung näher beschrieben. Das in Fig. 1 in einer perspektivischen Draufsicht dargestellte erfindungsgemäße Werkzeug 1 besteht aus zwei miteinander verbundenen Segmenten 11, die passgenau zueinander positioniert und auf der Oberseite durch eine Schweißnaht 12 miteinander verbunden wurden. Die Schweißnaht 12 wurde durch ein Laserschweißverfahren hergestellt, das nur eine relativ geringe lokale Wärmeentwicklung verursacht, wodurch Formabweichungen weitgehend vermieden werden.

Das Werkzeug 1 umfasst eine Werkzeugschale 3, die hier eine gewölbte Struktur zur Herstellung der gewünschten faserverstärkten Bauteile 2 ausweist und einen Randbereich 15 mit einer Aufnahmerille 16, an der die Prozessfolie 17 luftdicht befestigbar ist.

Ösen 19 dienen zum Transport zum und/oder zur Befestigung des Werkzeugs 1 am vorgesehenen Aufstellungsort.

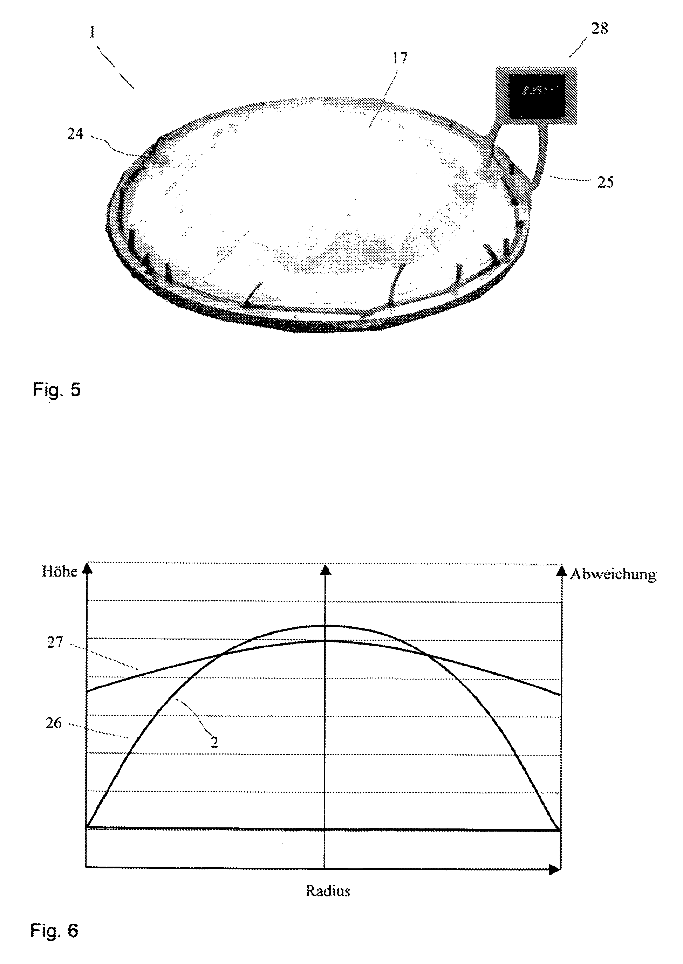

Zur Herstellung eines faserverstärkten Bauteils 2 (vgl. Fig. 6) wird die Oberseite 4 der Werkzeugschale 3 des Werkzeugs 1 mit einem Fasergewebe oder mit Fasermatten oder dergleichen belegt, bis die gewünschte Dicke der faserverstärkten Platten erreicht wird. Im Anschluss daran wird die Prozessfolie 17 (sh. Fig. 5) aufgebracht und an der Aufnahmerille 16 luftdicht befestigt, Aus dem Zwischenraum zwischen der Folie 17 und der Oberseite 4 der Werkzeugschale 3 wird danach die Luft abgesaugt und ein relatives Vakuum erzeugt, welches das durch einen Harzeinlass 24 injizierte flüssige Harz ansaugt und eine Verteilung des flüssigen Harzes auf der Oberseite 4 der Werkzeugschale 3 unterstützt.

Das angelegt Vakuum kann über eine Druckanzeige 28 kontrolliert werden und sorgt für eine gleichmäßige Verteilung des flüssigen Harzes und eine gleichmäßige Benetzung der Fasermatten, Faserplatten oder Fasergewebelagen.

Nach der Aufheizung und Temperierung des Werkzeugs 1 für eine vorbestimmte Prozesszeit kann das Werkzeug 1 dem Ofen entnommen und wieder abgekühlt werden. Nach einer ausreichenden Aushärtungszeit kann das Bauteil 2 entnommen werden und gegebenenfalls auf seine Qualität untersucht werden, bevor es seiner gedachten Verwendung zugeführt wird.

Zur Überprüfung der Qualität können Probenhereiche 18 (vgl. Fig. 1) vorgesehen sein, die dem fertigen faserverstärkten Bauteil 2 entnommen werden, um dort die Qualität des hergestellten Bauteils zu überprüfen und/oder einer Lagerung zuzuführen, um gegebenenfalls später die entsprechenden Proben noch untersuchen zu können.

Eine perspektivische Unteransicht des erfindungsgemäßen Werkzeugs 1 zeigt Fig. 2. Wie deutlich erkennbar, weist das Werkzeug 1 auf der Unterseite 5 eine Rippenstruktur 6 auf, die hier eine Vielzahl von etwa senkrecht zueinander stehenden Verstärkungsrippen 7 umfasst, die von der Unterseite 5 des Werkzeugs 1 nach unten etwa senkrecht abstehen.

Hier im Ausführungsbeispiel liegt eine rechteckige Struktur 10 der Verstärkungsrippen 7 vor. In anderen Ausgestaltungen kann die Rippenstruktur 7 auch eine von Rechtecken abweichende Flächenstruktur aufweisen. Beispielsweise ist es möglich, die. Rippenstruktur 6 auch wabenförmig oder drei-, vier-, fünf- oder sechseckig auszuführen, sodass sich die Verläufe einzeiner Verstärkungsrippen 7 nicht nur rechteckig schneiden, wie es in Fig. 2 dargestellt ist, sondern unter beliebigen Winkeln.

Die Verstärkungsrippen 7 sind an dem Werkzeug 1 angeformt und einstückig damit ausgebildet, sodass ein homogenes Material vorliegt. Das wird dadurch erreicht dass die einzelnen Segmente 11 des Werkzeugs zunächst in einem Gießverfahren gegossen werden und anschließend sowohl auf der Oberseite 4 als auch auf der Unterseite 5 spanend nachbearbeitet werden, um die gewünschte Oberflächenstruktur herzustellen.

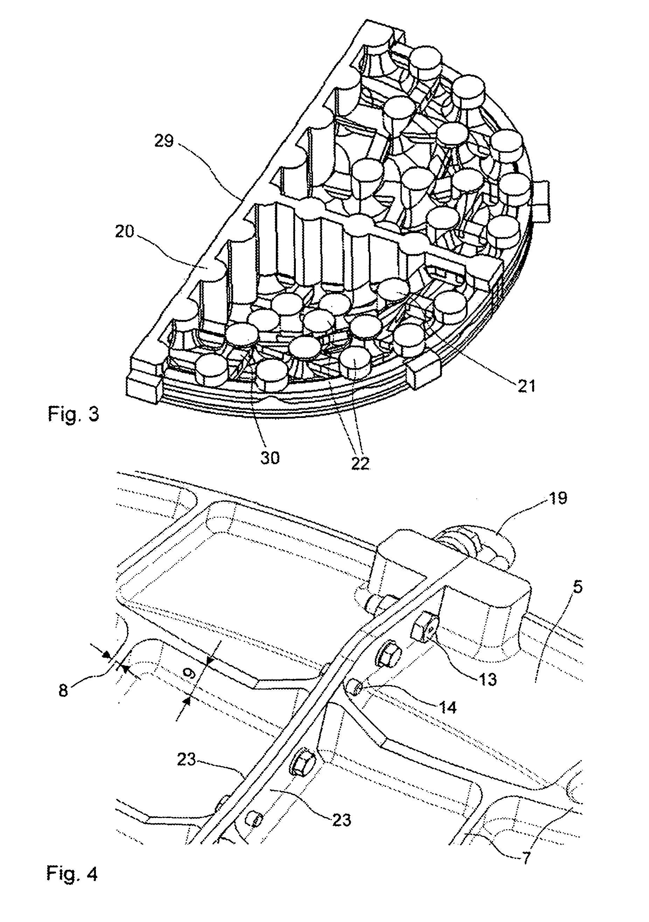

Fig. 3 zeigt eine perspektivische Unteransicht eines Rohsegments 29, aus dem durch spanende Bearbeitung ein Segment 11 des Werkzeugs 1 hergestellt wird. Die Rohstruktur 21 auf der Unterseite 5 weist hier Zylinderfortsätze 22 und Verbindungsstege 30 auf, aus denen im nachfolgenden Bearbeitungsschritt die einzelnen Verstärkungsrippen 7 geformt werden. Um die Bildung von Lufteinschlüssen oder sonstigen Fehlbildungen in dem Gussteil zu vermeiden, wird die Form des Gussteils im vorhinein exakt berechnet und es wird eine Struktur gegossen, die die Verstärkungsrippen 7 vollständig enthält, während gleichzeitig Fehlbildungen weitestgehend ausgeschlossen werden.

Durch die spanende Bearbeitung der Unterseite 5 und der Oberseite 4 der Rohsegmente 29 entstehen die Segmente 11, die die gewünschten Oberflächenstrukturen auf der Oberseite 4 und die gewünschte Rippenstruktur 6 auf der Unterseite 5 aufweisen. Dabei wird insbesondere eine Wandstärke 8 der Verstärkungsrippen 7 und der Werkzeugschale 3 über der gesamten Fläche des Segments 11 weitestgehend konstant gehalten. Die Wandstärke beträgt in einem speziellen Ausführungsfall etwa zehn Millimeter wobei ein Durchmesser eines Segments ein, zwei, drei oder sogar vier Meter betragen kann, großflächig Segmente 11 herstellbar sind, die nur eine geringe Wandstärke 8 und trotzdem eine hohe Formstabilität aufweisen. Durch Verbindung mehrerer Segmente 11 kann ein noch weitaus größeres Werkzeug hergestellt werden.

Zur Verbindung mehrerer Segmente 11 zu einem Werkzeug 1 werden die Segmente an der Verbindungslinie durch eine Schweißnaht 12 miteinander verbunden, die durch ein Laserschweißverfahren erzeugt wird.

Auf der Unterseite 5 des Werkzeugs 1 sind entlang der Kontaktlinie Befestigungskanten 23 an den beiden Segmenten 11 vorgesehen, die zur festen Verbindung der beiden Segmente 11 vorgesehen sind. Die beiden Segmente 11 werden durch Passstifte 14 zueinander in Position gehalten, während durch Schrauben 13 ein Formschluss erzielt wird. Die Schweißnaht 12 auf der Oberseite 4 hingegen dient im Wesentlichen nicht zur Befestigung der beiden Segmente 11. sondern dazu, eine Vakuumdichtigkeit bei der Herstellung der faserverstärkten Bauteile 12 zu gewährleisten. Ansonsten könnte durch einen Spalt zwischen den beiden Segmenten 11 Luft bei der Evakuierung angesaugt werden, was zu einer ungenügenden Qualität der hergestellten faserverstärkten Bauteile 2 führenkönnte.

Um eine örtliche Dehnung der Werkzeugschale 3 gezielt zu beeinflussen kann die Höhe 9 der Verstärkungsrippen 7 sowie deren Abstand 31 zur nächsten Verstärkungsrippe örtlich entsprechend angepasst werden. Durch eine größere Höhe 9 wird die Wärmedehnung örtlich verringert, während durch eine geringere Höhe 9 oder durch einen größeren Abstand 31 die lokale Dehnbarkeit zunimmt.

Über eine geeignete Rippenstruktur 6 mit entsprechenden Wandstärken 8 und Höhen 9 der Rippen 7 kann die gewünschte Dehnbarkeit über der gesamten Oberfläche der Werkzeugschale 3 eingestellt werden. Weiterhin wird durch eine Vorausberechnung der Wärmedehnung mittels eines Finite-Elemente-Modells (FEM) eine exakte Vorausberechnung des CAD-Modells und dessen Wärmeausdehnung vorberechnet, sodsss sich die durch das Werkzeug 1 ergebenden Wärmeausdehnungen im vorhin berücksichtigen lassen, sodass die Werkzeugschale 3 bei einer definierten Prozesstemperatur eine gewünschte Oberflächenkontur aufweist.

in Fig. 6 ist die eines faserverstärkten Bauteils 2 über dem Radius dargestellt. Der Verlauf 26 der Höhe über dem Radius entspricht hier nahezu den Idealvorgaben. Die örtliche Abweichung zeigt die Kurve 27. Hier in einem konkreten Ausführungsbeispiel beträgt bei einem Radius von etwa einem Meter die maximale Abweichung von der ideallinie weniger als 0,4 Millimeter, sodass sich hoch genaue faserverstärkte Bauteile 2 herstellen lassen.

### Bezugszeichenliste:

- 1: Werkzeug
- 2: faserverstärktes Bauteil
- 3: Werkzeugschale
- 4: Oberseite
- 5: Unterseite
- 6: Rippenstruktur
- 7: Verstärkungsrippen
- 8: Wandstärke
- 9: Höhe
- 10: Rechteckige Struktur
- 11: Segmente
- 12: Schweißnaht
- 13: Schraube
- 14: Passstift
- 15: Randbereich
- 16: Aufnahmerille
- 17: Prozessfolle
- 18: Probenbereich
- 19: Öse
- 20: Steg
- 21: Rohstruktur
- 22: Zylinderfortsätze
- 23: Befestigungskante
- 24: Harzeinlass
- 25: Luftauslass
- 26: Verlauf
- 27: Abweichung
- 28: Druckanzeige
- 29: Rohsegment
- 30: Verbindungsstege
- 31: Abstand

## Patentansprüche

1. Werkzeug (1), zur Herstellung von faserverstärkten Bauteilen (2), umfassend eine Werkzeugschale (3) mit einer Oberseite (4) zur Formgebung des faserverstärkten Bauteils (2) und mit einer Unterseite (5), **dadurch gekennzeichnet, dass** die im Gießverfahren hergestellte, aus wenigstens zwei Segmenten (11) bestehende Werkzeugschale (3) formstabil ausgebildet ist, wozu die Werkzeugschale (3) an der Unterseite eine angeformte Rippenstruktur aufweist.

2. Werkzeug (1) nach Anspruch 1, **dadurch gekennzeichnet, dass** die Rippenstruktur (6) eine Mehrzahl an Verstärkungsrippen (7) umfasst, welche den gleichen Wärmeausdehnungskoeffizienten wie die Werkzeugschale (3) aufweisen und insbesondere aus im Wesentlichen dem gleichen Werkstoff bestehen.

3. Werkzeug (1) nach Anspruch 1 oder 2, **dadurch gekennzeichnet, dass** die Rippenstruktur (8) einstückig mit der Werkzeugschale (3) ausgebildet ist

4. Werkzeug (1) nach einem der vorangehenden Ansprüche, **dadurch gekennzeichnet, dass** die Werkzeugschale (3) gegossen und beidseitig nachbearbeitet ist und insbesondere aus einem Gussstahl besteht.

5. Werkzeug (1) nach einem der vorangehenden Ansprüche, **dadurch gekennzeichnet, dass** eine Wandstärke (8) der Werkzeugschale (3) und der Verstärkungerippen (7) Im wesentlichen über der gesamten Werkzeugschale (3) konstant ist.

6. Werkzeug (1) nach einem der vorangehenden Ansprüche, **dadurch gekennzeichnet, dass** die Wandstärke (8) der Werkzeugschale (3) kleiner 30 mm und insbesondere zwischen etwa 5 mm und 20 mm beträgt, wobei vorzugsweise eine Höhe (9) der Verstärkungsrippen (7) zwischen 6 mm und 100 mm beträgt.

7. Werkzeug (1) nach einem der vorangehenden Ansprüche, **dadurch gekennzeichnet, dass** eine Struktur (10) der Verstärkungsrippen (7) rechteckig, abgerundet, drei- oder mehreckig oder wabenförmig ausgebildet ist.

8. Werkzeug (1) nach einem der vorangehenden Ansprüche, **dadurch gekennzeichnet, dass** die Werkzeugschale (3) aus wenigstens einen oder mehreren separaten Segmenten (11) besteht, welche insbesondere luftdicht und vorzugsweise vakuumdicht miteinander verbunden sind.

9. Werkzeug (1) nach Anspruch 8, **dadurch gekennzeichnet, dass** die Segmente (11) auf der Oberseite (4) verschweißt sind,

10. Werkzeug (1) nach Anspruch 8 oder 9, **dadurch gekennzeichnet, dass** die Segmente (11) auf der Unterseite (5) formschlüssig miteinander verbunden sind.

11. Werkzeug (1) nach einem der vorangehenden Ansprüche, **dadurch gekennzeichnet, dass** in einem Randbereich (15) auf der Oberseite (4) eine Aufnahmerille (18) vorgesehen ist, welche zur Aufnahme eines Harzkanals bzw. Vakuumkanal (17) dient.

12. Verfahren zum Herstellen eines Werkzeugs (1), insbesondere zur Herstellung faserverstärkter Bauteile (2), bei dem eine Werkzeugschale (3) durch ein Gießverfahren hergestellt wird und bei dem sowohl die zur Formgebung des faserverstärkten Bauteils (2) vorgesehene Oberseite (4) als auch die gegenüberliegende Unterseite (5) nach dem Gießverfahren nachbearbeitet werden, um auf der Unterseite (5) eine Rippenstruktur (6) mit einer Mehrzahl an Verstärkungsrippen auszubilden, um eine formstabile Werkzeugschale (3) zu bilden.

13. Verfahren nach Anspruch 12, wobei die Werkzeugschale (3) durch wenigstens zwei separate Segmente (11) gebildet wird, die auf der Oberseite (4) verschweißt und auf der Unterseite (5) formschlüssig miteinander verbunden werden.

## Claims

1. A tool (1) for producing fiber-reinforced components (2), comprising a tool shell (3) having a top side (4) for shaping the fiber-reinforced component (2), and an underside (5), **characterized in that** the tool shell (3) is produced in a casting process, is formed of at least two segments, and comprises an integrally molded ribbed structure (6) on the underside (5) such that the tool shell (3) is dimensionally stable.

2. The tool (1) of claim 1, **characterized in that** the ribbed structure (6) comprises a plurality of reinforcing ribs (7), wherein said reinforcing ribs (7) have the same coefficient of thermal expansion as does said tool shell (3), and in particular are composed of essentially the same material.

3. The tool (1) of claim 1 or 2, **characterized in that** said ribbed structure (6) forms a one-piece material with the tool shell (3).

4. The tool (1) of one of the preceding claims, **characterized in that** said tool shell (3) is formed as a cast tool shell machined on both sides, and in particular is composed of a cast steel.

5. The tool (1) of one of the preceding claims, **characterized in that** said tool shell and said reinforcing ribs (7) have a wall thickness (8) which is essentially constant across said tool shell (3) in its entirety.

6. The tool (1) of one of the preceding claims, **characterized in that** said tool shell (3) has a wall thickness which is less than 30 mm, in particular said wall thickness of said tool shell is between substantially 5 mm and 20 mm, wherein preferentially said reinforcing ribs (7) have a height (9) which is between 5 mm and 100 mm.

7. The tool (1) of one of the preceding claims, **characterized in that** said reinforcing ribs (7) have a structure (10) selected from the group consisting of a structure having a rectangular shape, a structure having a rounded shape, a structure having three corners, a structure having more than three corners, and a structure having a honeycomb design.

8. The tool (1) of one of the preceding claims, **characterized in that** said tool shell (3) is composed of at least one or several segments (11), wherein in particular said segments (11) are connected with each other in an air tight manner and preferentially in a vacuum-tight manner.

9. The tool (1) of claim 8, **characterized in that** the segments (11) are welded on said top side (4).

10. The tool (1) of claim 8 or 9, **characterized in that** the segments (11) are connected with each other on the underside (5) in a form-fit manner.

11. The tool (1) of one of the preceding claims, **characterized in that** said top side (4) has an edge region (15) provided with a receiving groove (16) which is configured to receive a channel selected from the group consisting of a resin channel, a vacuum channel (17), and both.

12. A method for manufacturing a tool (1), in particular for manufacturing fiber-reinforced tools (2) in which a tool shell (3) is produced using a casting process, and in which a top side (4) for shaping a fiber-reinforced component (2) as well as an underside (5) which is arranged opposite to the top side (4) are machined after the casting process for forming an integrally molded ribbed structure (6) on the underside of the tool shell (3) to make the tool shell (3) dimensionally stable.

13. The method of claim 12, wherein the tool shell (3) is formed by at least two separate segements (11) which are welded on the top side (4) and connected with each other on the underside (5) in a form-fit manner.

## Revendications

1. Outil (1) pour fabriquer des pièces renforcées par fibres de verre (2), comprenant une coque d'outil (3) avec une face supérieure (4) pour donner une forme à la pièce renforcée par fibres de verre (2) et une face inférieure (5), **caractérisé en ce que** la coque d'outil (3) fabriquée par coulée et composée d'au moins deux segments (11) a une forme stable, la coque d'outil (3) présentant pour cela une structure nervurée sur la face inférieure.

2. Outil (1) selon la revendication 1, **caractérisé en ce que** la structure nervurée (6) comprend une pluralité de nervures de renfort (7) qui présentent le même coefficient de dilatation thermique que la coque d'outil (3) et sont fabriquées en particulier du même matériau.

3. Outil (1) selon la revendication 1 ou 2, **caractérisé en ce que** la structure nervurée (6) est fabriquée d'un seul tenant avec la coque d'outil (3).

4. Outil (1) selon l'une des revendications précédentes, **caractérisé en ce que** la coque d'outil (3) est coulée et réusinées des deux côtés et est fabriquée en particulier en fonte d'acier.

5. Outil (1) selon l'une des revendications précédentes, **caractérisé en ce qu'**une épaisseur de paroi (8) de la coque d'outil (3) et des nervures de renfort (7) est essentiellement constante sur toute la coque d'outil (3).

6. Outil (1) selon l'une des revendications précédentes, **caractérisé en ce que** l'épaisseur de paroi (8) de la coque d'outil (3) fait moins de 30 mm, fait entre environ 5 mm et 20 mm en particulier, sachant que de préférence une hauteur (9) des nervures de renfort (7) fait entre 5 mm et 100 mm.

7. Outil (1) selon l'une des revendications précédentes, **caractérisé en ce qu'**une structure (10) des nervures de renfort (7) est rectangulaire, arrondie, triangulaire, polygonale, ou alvéolaire.

8. Outil (1) selon l'une des revendications précédentes, **caractérisé en ce que** la coque d'outil (3) est composée d'au moins un ou plusieurs segments (11) séparés, lesquels sont en particulier reliés entre eux de manière étanche à l'air et de préférence étanche au vide.

9. Outil (1) selon la revendication 8, **caractérisé en ce que** les segments (11) sont soudés sur la face supérieure (4).

10. Outil (1) selon la revendication 8 ou 9, **caractérisé en ce que** les segments (11) sont reliés entre eux par complémentarité de forme sur la face inférieure (5).

11. Outil (1) selon l'une des revendications précédentes, **caractérisé en ce qu'**une encoche de réception (16) est prévue dans un bord (15) sur la face supérieure (4), laquelle sert à recevoir un canal de résine, respectivement un canal de vide (17).

12. Procédé de fabrication d'un outil (1), en particulier pour fabriquer des pièces renforcées par fibres de verre (2), dans lequel une coque d'outil (3) est fabriquée par coulée et dans lequel tant la face supérieure (4) prévue pour donner une forme à la pièce renforcée par fibres de verre (2), que la face inférieure (5) opposée, sont réusinées après la coulée, afin de former une structure nervurée (6) avec une pluralité de nervures de renfort sur la face inférieure (5), pour former une coque d'outil (3) à forme stable.

13. Outil selon la revendication 12, dans lequel la coque d'outil (3) est formée par au moins deux segments séparés (11) qui sont soudés sur la face supérieure (4) et reliés entre eux par complémentarité de forme sur la face inférieure (5).
